# EUROPÄISCHE PATENTSCHRIFT

(11) **EP 2 669 984 B1**
(45) Veröffentlichungstag und Bekanntmachung des Hinweises auf die Patenterteilung: **22.04.2015**
(21) Anmeldenummer: 13002420.1
(22) Anmeldetag: 07.05.2013
(51) Int. Cl.: H01M 8/12, C01B 13/02, C04B 38/00, H01M 4/86, H01M 4/88, H01M 4/90, H01M 12/06

(54) **Anoden-Schichtsystem für elektrochemische Anwendungen sowie Verfahren zur Herstellung desselben**
Layered anode system for electrochemical applications and process of manufacturing the same
Système de couches d'anode pour applications electrochimiques et son procédé de fabrication

(30) Priorität: 02.06.2012 DE 102012011081
(43) Veröffentlichungstag der Anmeldung: 04.12.2013
(73) Patentinhaber: Forschungszentrum Jülich GmbH, 52425 Jülich (DE)
(72) Erfinder: Han, Feng, 71065 Sindelfingen (DE); Menzler, Norbert H., 52428 Jülich (DE); Buchkremer, Hans Peter, 52525 Heinsberg-Schafhausen (DE)

(56) Entgegenhaltungen:
- WO-A1-2008/127652
- WO-A1-2011/001930
- DE-A1-102006 030 393
- US-A1- 2007 141 422
- US-A1- 2008 138 669
- US-A1- 2012 003 565

## Beschreibung

Die Erfindung betrifft ein Anoden-Schichtsystem für elektrochemische Anwendungen, insbesondere für Brennstoffzellen, für Sauerstofftransport-Membranen oder auch für Metall-Metalloxid-Batterien. Ferner betrifft die Erfindung ein Verfahren zur Herstellung eines solchen Anoden-Elektrolyt-Schichtsystems.

### Stand der Technik

Festelektrolyt-Brennstoffzellen (engl. solid oxide fuel cells (SOFC)) werden als eine der effizientesten und umweltfreundlichsten Einheiten zur Direktumsetzung von chemischer Energie in Elektrizität betrachtet. Für die Kommerzialisierung von SOFCs müssen sowohl die Langzeitstabilität als auch die Systemzuverlässigkeit gewährleistet und die Herstellungskosten reduziert werden.

Heutzutage stehen einerseits SOFCs für neue Anwendungsfelder und Bedingungen (z. B. verminderte Betriebstemperatur, Verwendung als Bordstromaggregat), Degradationsverständnis und Erhöhung der Bauteilrobustheit und andererseits Kostenoptimierungspotentiale im Vordergrund.

Als größte Herausforderung wird unter anderem die Verringerung der Betriebstemperatur auf 650 °C bis 700 °C bei gleichzeitiger Beibehaltung einer angemessenen Leistungsabgabe des Systems angesehen. Durch den Betrieb der Zellen bei reduzierten Temperaturen wird für diese eine deutlich verbesserte Lebensdauer und Stabilität der SOFCs erwartet. Gleichzeitig könnten die Herstellungskosten des SOFC-Systems damit zusätzlich effektiv reduziert werden, weil für die Herstellung kostengünstige Materialien eingesetzt werden können, wie beispielsweise ferritische Stähle.

Bekannt sind SOFC für den Einsatz bei moderaten Temperaturen zwischen 700 °C und 800 °C, bei denen auf beiden Seiten des standardmäßigen Elektrolyten aus Yttrium stabilisiertem Zirkoniumdioxid (YSZ) Cer-basierte Zwischenschichten angeordnet sind.

Mit Gadolinium dotiertes Ceroxid (GDC, oder auch engl. ceria-gadolinia (CGO)) weist den Vorteil einer sehr hohen ionischen Leitfähigkeit und einer sehr guten chemischen Beständigkeit, insbesondere gegenüber CO₂ bei Temperaturen zwischen 600 °C und 850 °C, auf. Allerdings führt eine reduzierende Brenngasatmosphäre in dem Cer aufweisenden Material häufig zu elektronischer Leitfähigkeit, welche für einen Einsatz als Elektrolyt von Nachteil wäre. Als Lösung für dieses Problem wurde bereits ein Doppelschicht CGO/YSZ-Elektrolyt mit einer dünnen, YSZ-Schicht mit Elektronen blockierenden Eigenschaften beschrieben, die auf den Cer-haltigen Elektrolyten aufgebracht wurde [1].

Jedoch führen Festkörperreaktionen und Diffusionsprozesse zwischen dem YSZ und dem Cer umfassenden Material der Zwischenschicht insbesondere schon bei der Herstellung der SOFC und Sintertemperaturen um die 1200 °C nachteilig zu einer Degenerierung des Elektrolyten.

Da sowohl YSZ als auch Cer gut mit Nickel verträglich sind, werden die Festkörperreaktionen und Diffusionsprozesse im Beisein von Nickel noch weiter verstärkt. Damit treten diese Probleme insbesondere dann auf, wenn YSZ als Elektrolyt und ein Cer dotiertes YSZ-Ni Cermet als typische Anodenfunktionsschicht eingesetzt werden.

Auf Grund der hohen elektronischen Leitfähigkeit bei Temperaturen oberhalb von 600 °C ist auf der anderen Seite Gadolinium dotiertes Ceroxid (GDC) als Elektrolyt ungeeignet, solange keine elektronische Barriere vorgesehen ist.

Andererseits reicht die ionische Leitfähigkeit von YSZ-Materialien in der Regel für die Anwendungen einer SOFC bei verringerten Betriebstemperaturen unter 600 °C nicht mehr aus, so dass hier vorteilhaft auf Gadolinium dotiertes Ceroxid (GDC) zurückgegriffen wird.

Bereits 2006 wurden Untersuchungen zur Zellleistung mit 2-lagigen Elektrolyten durchgeführt. Diese bestanden aus einer ersten Schicht umfassend Gadolinium-dotiertes Ceroxid (GDC), welche in Bezug auf die lonenleitfähigkeit als aussichtsreichster Kandidat für die Anwendung in einer Festoxid-Brennstoffzelle gilt, die mit einer sehr dünnen Schicht aus mit Yttrium-stabilisiertem Zirkoniumdioxid (YSZ) als elektronische Sperrschicht beschichtet war. Dieser 2-lagige GDC/YSZ Elektrolyt wurde auf einer Standard SOFC-Kathode aus mit Strontium dotierten Lanthan-Maganit (LSM) angeordnet [2].

Unter den verschiedenen Konzepten zur Herstellung einer SOFC hat sich die Verfahrenweise zur Anoden-gestützten Brennstoffzelle als sehr aussichtsreich herausgestellt. Das mechanisch tragende Element ist dabei ein Träger aus einem Anodenmaterial (Substrat, support), welches über einen Press-, Gieß- oder Walzprozess hergestellt wird. Nach dem Vorsintern des Substrats oder einer grün-in-grün Bearbeitung (die Grünbearbeitung erfolgt an getrockneten Bauteilen, die noch organische Hilfsstoffe enthalten) werden die eigentliche Anode (Anodenfunktionsschicht) und der Elektrolyt durch beispielsweise Vakuumschlickerguss, Siebdruck, Rollbeschichtung oder ein Verfahren aufgebracht und der Elektrolyt anschließend gasdicht versintert. Die Aufbringung der Kathode erfolgt im Anschluss in der Regel über Siebdruck mit anschließender Wärmebehandlung.

Alternativ zu einem ein Träger aus einem Anodenmaterial kann auch ein metallischer Träger, z. B. aus Stahl ITM, Crofer^{®}22APU oder einer analogen Legierung eingesetzt werden [3].

Bei Verwendung dieser metallischen Tragstruktur erfolgen die anschließenden Beschichtungsprozesse entweder analog, d. h. mit Keramiktechnologie oder über thermisches Spritzen [4]. Zu beachten ist hierbei, dass in ersterem Fall die Sinterungen ausschließlich unter Vakuum oder Inertgas durchzuführen sind, um eine Oxidation des Trägers zu verhindern.

Bei auf diese Weise hergestellten Anoden-Elektrolyt-Verbünden, die für den Einsatz bei Betriebstemperaturen zwischen 600 °C und 750 °C geeignet sind, und bei denen als Anodensubstrat oder als Anode Ni(O)-YSZ und als Elektolyt GDC eingesetzt werden, treten bekanntermaßen Festkörperreaktionen an der Grenzfläche zwischen dem YSZ und dem Ceroxid auf, die nachteilig zu einer deutlichen Verringerung der ionischen Leitfähigkeit führen.

Aus [5] sind beispielsweise Untersuchungen bekannt, bei denen die Festkörperreaktionen und Interdiffusionsprozesse an der Grenzfläche von YSZ mit einerseits Gadolinium-dotiertem Ceroxid (GDC) und andererseits mit Cer-dotiertem YSZ-Ni-Cermet beschrieben werden, die bereits bei der Herstellung, insbesondere bei einem Sinterschritt mit Temperaturen um ca. 1200 °C auftreten. Es hat sich gezeigt, dass durch eine eingebrachte Zwischenschicht umfassend CeO₂, insbesondere durch eine dünne, 1 µm dicke Zwischenschicht mit der Summenformel Ce_{0,43}Zr_{0,43}Gd_{0,10}Y_{0,04}0_{1,93} die Festkörperreaktionen und Diffusionsprozesse an einer YSZ/GDC Grenzfläche unterdrückt werden können, auch im Beisein von Nickel.

Aus US 2008/0138669 A1 ist eine Schwefel-tolerante Anode für eine Festelektrolyt-Brennstoffzelle (SOFC) bekannt. Das zweischichtige Anodensystem weist eine 1. Schicht vorzugsweise aus Lanthan-Strontiumtitanat (LST) oder Lanthan-Strontiumvanadat (LSV) und optional mit Yttrium dotiertes Zirkoniumdioxid (YSZ) auf. Die 2. Schicht, in der die Oxidation von molekularem Wasserstoff stattfindet, weist mit Gadolinium dotiertes Ceroxid und Nickel auf, wobei die 2.Schicht optional auch noch mit YSZ als separate Phase durchsetzt sein kann.

### Aufgabe und Lösung

Die Aufgabe der Erfindung ist es, ein Anoden-Schichtsystem für eine Anoden-gestützte Brennstoffzelle bereit zu stellen, welche für den Einsatz bei moderaten Temperaturen unterhalb von 600 °C betrieben werden kann, und welche einerseits für den Einsatz eines Elektrolyten, umfassend Gadolinium-dotiertes Ceroxid (GDC), geeignet ist, andererseits aber überwiegend das preiswerte Zirkoniumdioxid als Anoden- und Elektrolytmaterial aufweist. Weiterhin ist es die Aufgabe der Erfindung, ein Verfahren zur Herstellung eines solchen Anoden-Schichtsystems für die elektrochemische Anwendung bereit zu stellen.

### Gegenstand der Erfindung

Gegenstand der Erfindung ist ein Anoden-Schichtsystem für eine elektrochemische Anwendung, insbesondere für eine SOFC, die vorteilhaft in dem Temperaturbereich unterhalb von 600 °C betrieben werden kann. Es hat sich aber herausgestellt, dass ein solches Anoden-Schichtsystem auch vorteilhaft für Sauerstofftransport-Membranen oder auch für Metall-Metalloxid-Batterien eingesetzt werden kann.

Das erfindungsgemäße Anoden-Schichtsystem umfasst eine erste Schicht, mit der Funktion einer mechanischen Trägerschicht (support), sowie eine darauf angeordnete zweite Schicht mit der Funktion einer Anode (Anodenfunktionsschicht). An der Anodenfunktionsschicht laufen die anodenseitigen, elektrochemischen Prozesse ab. Die Mikrostruktur und Dicke der Anodenfunktionsschicht muss dafür geeignet und entsprechend ausgelegt sein. Ferner muss die Anodenfunktionsschicht regelmäßig die größere Rauhigkeit der Trägerschicht (erste Schicht) ausgleichen, um im nächsten Schritt die Beschichtung mit einem gasdichten Elektrolyten zu ermöglichen.

### 1. Schicht

Die erste Schicht (Trägerschicht) weist ein Zirkoniumdioxid auf, vorteilhaft ein mit Yttrium oder Scandium dotiertes Zirkoniumdioxid (YSZ oder SSZ). Sowohl die Trägerschicht als auch die Anodenschicht weisen zudem zusätzlich Katalysatoren in Form von Nickel oder Nickeloxid auf. Der Anteil an NiO beträgt dabei 20 - 80 Gew.-%, vorteilhaft 50 - 70 Gew.-%. Das NiO wird als Pulver mit d₅₀ 0,1 bis 5 µm, vorteilhaft 0,3 bis 1 µm eingesetzt. Sofern als erste Schicht ein typisches NiO/YSZ Anodematerial gewählt wird, ist zu beachten dass sich durch unterschiedliche Mischungsverhältnisse der beiden Komponenten die Mikrostruktur, Schwindung und elektronische Leitfähigkeit in Abhängigkeit dieses Verhältnisses ändern können. Insbesondere die elektronische Leitfähigkeit ist von dem entsprechenden Mischungsverhältnis abhängig. Unter YSZ ist dabei ein mit 8 mol-% Yttrium stabilisiertes Zirkoniumdioxid gemeint. Die Korngrößenverteilung des YSZ liegt typisch zwischen d₁₀ = 0,2 und d₉₀ = 5 µm, vorteilhaft zwischen d₁₀ = 0,5 und d₉₀ = 2 µm. Der d₅₀-Wert des YSZ liegt regelmäßig um ∼1 µm.

Die erste Schicht des Schichtsystems ist in der Regel porös ausgestaltet, um beim Einsatz in einer Brennstoffzelle das entsprechende Betriebsmittel, beispielsweise den Brennstoff oder das Oxidationsmittel durchleiten zu können. Die Porosität liegt dabei zwischen 20 und 80 Vol.-%, vorteilhaft zwischen 30 und 50 Vol.-%. Die Poren der ersten Schicht weisen dabei einen mittleren Porendurchmesser im Bereich von 0,1 bis 5 µm auf.

Im Fall einer Anodenträgerschicht für eine SOFC kann das Betriebsmittel beispielsweise Wasserstoff oder auch Methan sein. In ihrer Funktion als ein mechanischer Träger weist diese erste Schicht eine Schichtdicke von wenigstens 200 µm auf. Vorteilhaft hat sich aber eine Schichtdicke von wenigstens 300 µm, insbesondere von um die 500 µm herausgestellt. Dickere Schichten als 1000 µm sind in der Regel nicht notwendig aber möglich. Dicke Trägerschichten erhöhen die Materialkosten, können aber ggf. aus Stabilitätsgründen sinnvoll sein (z. B. bei einer Metallgestützten SOFC). Insbesondere ist darauf zu achten, dass dickere Tragstrukturen einen höheren Volumenanteil an Porosität aufweisen sollten, um Gasdiffusionsverluste zu minimieren (vorteilhaft > 35 Vol.-%) und dünnere Tragstrukturen etwas geringere Porositäten aufweisen können (< 35 Vol.-%) aber nicht müssen.

### 2. Schicht

Die Anodenfunktionsschicht ist als zweite Schicht auf der ersten Schicht angeordnet, und hat die Funktion der eigentlichen Anode. Sie weist in einer ersten Ausführungsform ein dotiertes Ceroxid auf. Vorteilhaft wird dabei ein mit Gadolinium dotiertes Ceroxid (GDC) eingesetzt. Geeignete Alternativen dazu wären in weiteren Ausführungsformen auch mit Samarinoxid dotiertes Ceroxid (SmDC). Beide Materialien sind mit einer Dotierung von 10 Gew.-% und 20 Gew.-% kommerziell erhältlich. Die mittlere Korngröße des eingesetzten GDC Pulvers liegt regelmäßig zwischen 0,1 und 2 µm, vorteilhaft zwischen 0,3 und 1 µm.

Eine dritte Alternative könnte auch die Verwendung von Lanthan-Strontium-Gallium-Magnesium-Oxid (LSGM) als Hauptkomponente der zweiten Schicht sein.

Die Anodenfunktionsschicht (zweite Schicht) weist wie zuvor erwähnt zusätzlich einen Katalysator in Form von Nickel oder Nickeloxid auf. Der Anteil an NiO beträgt dabei 20 - 80 Gew.-%, vorteilhaft 50 - 70 Gew. %. Das NiO wird als Pulver mit d₅₀ von 0,1 bis 5 µm, vorteilhaft mit d₅₀ von 0,3 bis 1 µm eingesetzt. NiO/GDC ist als Anodenmaterial für den Einsatz einer Anoden-gestützten SOFC bereits bekannt und mehrfach hergestellt worden. Eine typische Zusammensetzung lautet beispielsweise NiO-Gd_{0,1}Ce_{0,9}O_{1,95} (Ni-GDC).

Die zweite Schicht des Schichtsystems ist ebenfalls ausreichend porös ausgestaltet, um die Gasversorgung einer sich daran anschließenden Schicht nicht zu behindern. Die Gesamtporosität der Doppelschicht kann dabei in derselben Größenordnung wie die der Trägerschicht allein liegen, sie kann aber auch feinteiliger und geringer sein, da die Schichtdicke deutlich vermindert ist. Die Poren der zweiten Schicht weisen einen mittleren Porendurchmesser im Bereich von 0,05 bis 1 µm, im Idealfall von 0,1 bis 0,5 µm auf.

Für den Fall, dass das erfindungsgemäße Schichtsystem eine Anode darstellt, muss das Betriebsmittel beispielsweise von der ersten Schicht (Trägerschicht) durch die zweite Schicht (Anodenfunktionsschicht) bis zu dem sich anschließenden Elektrolyt gelangen, damit an der so genannten 3-Phasengrenze die elektrochemische Umwandlung stattfinden kann.

Für die Sicherstellung solcher elektrochemischen Prozesse hat sich eine Schichtdicke von ca. 10 µm für eine fein strukturierte zweite Schicht (Anodenfunktionschicht) als ausreichend herausgestellt. Je nach Rauigkeit der ersten Schicht ist jedoch eine Dicke von 3 bis 50 µm, vorteilhaft von 5 bis 20 µm notwendig, um die Oberflächenrauhigkeit der ersten Schicht auszugleichen. Die zweite Schicht weist derzeit erfahrungsgemäß eine Schichtdicke von wenigstens 10 µm auf.

Die Poren der zweiten Schicht sind regelmäßig kleiner und homogener verteilt als die der ersten Schicht ausgestaltet. Dies wird regelmäßig durch den Einsatz kleinerer Ausgangspartikel realisiert, die teilweise auch noch zusätzlich gemahlen werden. Als Aufbringungsverfahren für die zweite Schicht haben sich als besonders geeignet herausgestellt: Siebdruck, Vakuumschlickerguss, Nasspulverspritzen, Foliengießen, Rollbeschichten.

Für den Transport eines Betriebsmittels von der ersten zur zweiten Schicht, wirkt daher die zweite Schicht Transport-limitierend. Um beim Einsatz in einer Brennstoffzelle eine ausreichende Versorgung des Oberflächenbereichs der ersten Schicht, weicher für den Kontakt mit einem Elektrolyten vorgesehen wäre, mit dem Anodengas als Betriebsmittel (3-Phasen-Grenze) zu gewährleisten, sollte die zweite Schicht (Anodenfunktionsschicht) aus strömungstechnischen Gründen eine Schichtdicke von mehr als 100 µm regelmäßig nicht übersteigen.

Unter der 3-Phasengrenze bei einer Brennstoffzelle wird die Grenzfläche zwischen gasförmigem oder flüssigem Betriebsmittel, der elektrisch leitenden Phase der Elektrode incl. dem Katalysator und der lonen leitenden Phase des Elektrolyten verstanden, an der die elektrochemische Umsetzung stattfindet. Je größer diese 3-Phasengrenze ist, desto größer ist die elektrochemische Umsetzung und damit die Effektivität der Brennstoffzelle. Daher wird die zweite Schicht in ihrer Funktion als Anodenfunktionsschicht möglichst feinkörnig und mit vielen kleinen Poren (mikroporös) ausgestaltet, um eine möglichst aktive Oberfläche zu erhalten.

### 3. Zwischenschicht

Bereits bei der Herstellung eines solchen Anoden-Schichtsystems, sofern Temperaturen oberhalb von ca. 1100 bis 1200 °C eingestellt werden, oder spätestens beim Einsatz und Betrieb dieses Schichtsystems bei solchen Temperaturen, kommt es an der Grenzfläche zwischen der ersten und der zweiten Schicht regelmäßig zu deutlichen Interdiffusionsprozessen und zu Festkörperreaktionen. Eine solche Festkörperreaktion in Form von Interdiffusionsprozessen wurde für die Materialien YSZ und GDC einerseits und YSZ und Cerdotiertes Zirkoniumdioxid andererseits bereits ausgiebig von Tsoga et al. [5] untersucht. Dabei wurde unter anderem festgestellt, dass sich eine schmale, ca. 2 bis 10 µm breite Grenzschicht (Zwischenschicht) ausbildet, in der es zu einer Interdiffusion kommt. Bei dem vorliegenden Beispiel tritt eine Interdiffusion von Zirkonium, Yttrium, Cer und Gadolinium auf. Die Zusammensetzung dieser Zwischenschicht, in der sich die entsprechenden Konzentrationsgradienten der vorgenannten Elemente einstellen, wurde als Ce_{0,37}Zr_{0,38}Gd_{0,18}Y_{0,07}O_{1,87} bestimmt. Ferner wurde herausgefunden, dass im Beisein von Nickel die Diffusion von Cer in das YSZ-Gitter reduziert wurde. Tsoga et al. [5] schlagen vor, eine dünne ca. 1 µm dicke Schicht mit der nominalen Zusammensetzung Ce_{0,37}Zr_{0,38}Gd_{0,18}Y_{0,07}O_{1,87} als Diffusionsbarriere an der YSZ-GDC-Grenzfläche vorzusehen, um die Festkörperreaktionen und Interdiffusionsprozesse zu hemmen.

Im Rahmen der Erfindung wurde jedoch erkannt, dass eine solche explizit eingebrachte Zwischenschicht bei dem erfindungsgemäßen Anoden-Schichtsystem nicht notwendig ist. Es wird im Gegenteil bewusst eine Festkörperreaktion zwischen der Zirkonium aufweisenden ersten Schicht und der Cer aufweisenden zweiten Schicht während des Sinterschritts in Kauf genommen.

Es wurde überraschend herausgefunden, dass dies keinen nachteiligen Einfluss auf die Funktionstüchtigkeit der Anode hat. Es muss lediglich sichergestellt sein, dass die zweite Schicht auch nach der Ausbildung einer auf Grund von Interdiffusionsprozessen generierten Zwischenschicht weiterhin einen noch unveränderten Bereich aufweist, der das reine Anodenmaterial mit einer noch ausreichenden Schichtdicke umfasst, um so eine ausreichende Funktionalität für die darin ablaufenden elektrochemischen Prozesse zu gewährleisten. Dies ist regelmäßig bei einer resultierenden Schichtdicke für den unveränderten Bereich von wenigstens 5 µm gegeben. Da sich erfahrungsgemäß die durch die Festkörperreaktion zwischen der Zirkonium aufweisenden ersten Schicht und der Cer aufweisenden zweiten Schicht gebildete Zwischenschicht mit einer Schichtdicke von ca. 5 µm ausbildet, hat sich eine Aufbringung der zweiten Schicht mit einer Schichtdicke von ca. 10 µm als vollkommen ausreichend herausgestellt. Trotz herstellungsbedingter Ausbildung der Zwischenschicht, die sowohl Zirkonium als auch Cer aufweist, kann dieses Zweischichtsystem vorteilhaft als Anode in einer Brennstoffzelle eingesetzt werden.

Die erfindungsgemäße zweischichtige Anode weist somit den großen Vorteil auf, dass weiterhin das bekannte und preiswerte YSZ überwiegend als Anodensupportmaterial eingesetzt werden kann, und lediglich eine dünne Schicht aus Cer basiertem Material als Anodenfunktionsschicht für den Kontakt zu dem Elektrolyten vorgesehen ist. Dadurch kann im Vergleich zu einer Brennstoffzelle mit einer NiO-GDC Anode der Verbrauch an Seltenerdenoxiden vorteilhaft zu über 97 % reduziert werden. Dies wiederum führt zu einer deutlichen Reduzierung der Herstellungskosten, ohne dass dadurch Leistungseinbußen zu befürchten wären.
Die Leistungsfähigkeit einer solchen zweischichtigen Anode wurde wie nachfolgend und im speziellen Beschreibungsteil beschrieben überprüft.

Das erfindungsgemäße zweischichtige Anodenschichtsystem ist nicht nur auf die Anwendung in einer Brennstoffzelle beschränkt. Denkbar wäre ebenfalls ein Einsatz als Substrat (Träger) oder Zwischenschicht(en) für eine Gastrennmembran oder eine Metall-Metalloxid-Batterie.

Um eine Aussage über die reale Funktionsfähigkeit der Substrat/Anoden-Einheiten in einer Brennstoffzelle treffen zu können, wurden vollständige Brennstoffzellen mit dem erfindungsgemäßen Anoden-Schichtsystem hergestellt und diese elektrochemisch charakterisiert. Hierzu wurde auf das erfindungsgemäße Anoden-Schichtsystem (Substrat mit Anodenbeschichtung) zunächst ein möglichst dünner und gasdichter Elektrolyt umfassend Gadolinium dotiertes Ceroxid aufgetragen.

Für die Elektrolytbeschichtung sind drei grundsätzliche Verfahrenstechniken vorstellbar. Am weitesten verbreitet sind nasschemische Beschichtungsprozesse mit anschließender Sinterung. Weiterhin gibt es Bestrebungen, Elektrolyte über thermische Beschichtungsverfahren abzuscheiden. Dies hat den Vorteil, dass auf eine zusätzliche Sinterung verzichtet werden kann. Schließlich sind auch physikalische Gasphasenabscheideprozesse wie PVD oder Sputtern interessant, insbesondere wenn dünne Elektrolytschichten angestrebt werden. Auch hier ist prinzipiell keine abschließende thermische Behandlung nötig. Vorteilhaft wurden nasschemische Beschichtungsprozesse mit anschließender Sinterung eingesetzt.

Im Anschluss an die aufgebrachten Elektrolyten wurde eine geeignete Kathode aus La_{0,58}Sr_{0,4}Co_{0,2}Fe_{0,8}O₃ (LSCF) oder (La, Sr)CoO_{3+δ} (LSC)-Pulver auf dem Elektrolyten angeordnet und die Brennstoffzelle einem bzw. mehreren Leistungstests unterzogen, wie sie beispielsweise in [5] offenbart werden.

### Spezieller Beschreibungsteil

Nachfolgend wird die Erfindung anhand eines Ausführungsbeispiels näher erläutert, ohne dass dadurch eine Einschränkung des Schutzbereiches gegeben ist.

In einer Versuchsanordnung wurde ein erfindungsgemäßes 2-lagiges Schichtsystem mit einer darauf angeordneten Elektrolytschicht (E), so wie es für den Einsatz in einer Brennstoffzelle realisiert werden würde, angeordnet. Das 2-lagige Schichtsystem bildet dabei die Anode einer Anoden-gestützten Brennstoffzelle. Die erste Schicht dient als mechanische Trägerstruktur und als Stromverteiler. Die erste Schicht umfasst mit Nickeloxid als Katalysator versetztes Yttrium stabilisiertes Zirkoniumoxid (YSZ) und weist eine entsprechende Schichtdicke von ca. 500 µm auf. Darauf angeordnet befindet sich die zweite Schicht als eigentliche Funktionsschicht einer Anode. Diese umfasst ebenfalls mit Nickeloxid als Katalysator versetztes Gadolinium dotiertes Ceroxid (GDC) und weist eine Schichtdicke von ca. 10 µm auf.

Beide Schichten sind derart porös ausgestaltet, dass das in dieser Brennstoffzelle eingesetzte Betriebsmittel in ausreichender Menge durch die Anode (Träger plus Funktionsschicht) zum benachbart angeordneten Elektrolyten gelangen kann. Dazu weisen beide Schichten eine Gesamtporosität von 40 bis 50 Vol.-% auf.

Als Elektrolyt wurde eine Schicht umfassend ebenfalls mit Gadolinium dotiertes Ceroxid (GDC) mit einer Schichtdicke von ca. 1 µm eingesetzt. Im Unterschied zu der zweiten Schicht des Anoden-Schichtsystems ist der Elektrolyt jedoch gasdicht ausgestaltet, so dass der Brennstoff und das Oxidationsmittel sich nicht vermischen können. Zur Überprüfung der Gasdichtigkeit wurde eine Leckrate von weniger als 2 x 10⁻⁵ hPa dm³ / (cm² s) mit Helium bei Δp = 1000 hPa und umgerechnet auf Δp = 100 hPa gemessen. Alternativ wurde eine Leckrate von ca. 8 x 10⁻⁶ hPa dm³ / (cm² s) mit Luft (Druckanstiegsmethode) bei Δp = 1000 hPa und umgerechnet auf Δp = 100 hPa gemessen.

An der Grenzfläche zwischen der ersten und der zweiten Schicht der Anode bildete sich während des Sinterschrittes bei Temperaturen oberhalb von ca. 1100 °C auf Grund von Interdiffusionsprozessen eine Zwischenschicht aus, in der sich Zirkonium, Yttrium und Nickel aus der ersten Schicht mit Gadolinium, Cer und Nickel aus der zweiten Schicht vermischten (Ce-Gd-Y-Zr, siehe Fig. 1). Diese Schicht weist eine Schichtdicke bis 5 µm auf.

Nachfolgend werden konkrete Ausführungsbeispiele dargestellt.

### a) Verfahren zur Herstellung der Trägerschicht

Die Trägerschicht wurde mit Hilfe des Foliengießens hergestellt. Dabei wurden 40 Gew.-% 8YSZ Pulver mit einer Partikelgröße d₅₀ < 0,5 µm mit 60 Gew.-% NiO mit einer Partikelgröße d₅₀ < 1 µm vermischt. Der Grünkörper wurde bei Raumtemperatur getrocknet und bei 1230 °C für 3 Stunden gesintert (Heizrate 3K/h).

### b) Verfahren zum Aufbringen der Anodenschicht

Die Anodenfunktionsschicht wurde über das Vakuum-Schlickerguss-Verfahren auf die Trägerschicht aufgebracht. Eingesetzt wurde eine Mischung aus 40 Gew.-% GDC Pulver mit einer Partikelgröße d₅₀ um die 0,3 µm und 60 Gew.-% NiO mit einer Partikelgröße d₅₀ < 1µm. Das Schichtsystem wurde bei Raumtemperatur oder alternativ bei ca. 60 °C getrocknet und anschließend bei ca. 1000 °C für 1 Stunde kalziniert (Heizrate ebenfalls 3K/h).

### c) Verfahren zum Aufbringen der Elektrolytschicht

Die Elektrolytschicht wird mit einer Schichtdicke zwischen 1 bis 2 µm über Rotationsbeschichtung (engl. spin-coating) oder über Tauchbeschichtung (engl. dip-coating) mit einer 1 Gew.-% GDC Nanosuspension aufgebracht. Die mittlere Partikelgröße d₅₀ der GDC Teilchen in der Suspension beträgt weniger als 100 nm. Die GDC Schicht wird anschließend bei ca. 1400 °C für 3 Stunden gesintert, um so die gasdichte GDC Elektrolytschicht auszubilden.

### d) Verfahren zum Aufbringen einer geeigneten Kathode

Die Kathode wurde mit Hilfe des Siebdrucks auf den Elektrolyten aufgebracht. Dazu wurde Kathodenpastenmaterial aus sprühgetrocknetem LSCF- oder LSC-Pulver eingesetzt.

### e) Überprüfung der Leistungsfähigkeit

In einer ersten Versuchsreihe wurde ein 2-lagiger Schichtverbund hergestellt, der als erste Schicht einen Träger aus NiO-YSZ mit einer Schichtdicke von 500 µm und eine darauf angeordnete NiO-GDC Anode als zweite Schicht mit einer Schichtdicke von 10 µm aufwies. Das Schichtsystem wurde bei Temperaturen bis 1400 °C für 5 Stunden gesintert, abgekühlt und dann in einer Ar/H₂ Atmosphäre bei 900 °C reduziert.

Zu Vergleichszwecken wurde ein weiterer 2-lagiger Anodenschichtverbund hergestellt, der als erste Schicht eine Trägerschicht aus NiO-YSZ mit einer Schichtdicke von 500 µm und eine darauf angeordnete NiO-YSZ Anodenschicht als zweite Schicht mit einer Schichtdicke von 10 µm aufwies. Dieses Schichtsystem wurde ebenfalls bei Temperaturen bis 1400 °C für 5 Stunden gesintert, abgekühlt und dann ebenfalls in einer Ar/H₂ Atmosphäre bei 900 °C reduziert.

Die Leitfähigkeit der Anodenfunktionsschicht hängt unter anderem von der Nickelinfiltration (Nickle percolation) und deren Netzwerkbildung ab. Es wurde herausgefunden, dass die Herstellung der Anodenschicht mit einem Anteil von 60 Gew.-% NiO eine ebenso ausreichend gute Leitfähigkeit wie die Trägerschicht aufweist. Dies konnte mit Hilfe von Untersuchungen mit einem Rasterelektronenmikroskop (REM oder engl. scanning electron microscope, SEM) und dem so genannten elemental mapping nachgewiesen werden. Danach zeigten sich zwischen den beiden Schichtsystemen (YSZ + GDC und YSZ + YSZ) keinerlei signifikante Unterschiede in der Nickelverteilung.

Das Verfahren des elemetal mapping erfolgt dabei wie folgt: Beim Auftreffen des Elektronenstrahls während der rasterelektronenmikroskopischen Analyse entsteht Röntgenstrahlung, die charakteristisch für die vom Elektronenstrahl getroffenen chemischen Elemente ist. Rastert man die Oberfläche einer Probe Punkt für Punkt ab, so kann für jeden Punkt die chemische Zusammensetzung ermittelt werden. Weist man den unterschiedlichen interessierenden Elementen Farben/Kontrast zu, so können farbige, landkartenähnliche Verteilungsbilder der Elemente (element mappings) erzeugt werden. Hierzu können sowohl die Signale der REM/EDX- als auch der REM/WDX-Analyse verwendet werden.

Die Untersuchungen zur Leitfähigkeit erfolgten wie nachfolgend aufgeführt. In beiden Systemen wurde die elektrische Leitfähigkeit jeweils quer zum Schichtsystem gemessen. Die elektrische Leitfähigkeit der Anode wurde mit Hilfe einer 4-Punkt-Messanordnung in Abhängigkeit von der Temperatur gemessen. Die Proben wurden dazu im endgesinterten und reduzierten Zustand mit Silberdraht und Silberleitlack kontaktiert. Durch die Trennung des Spannungsabgriffs von der Stromzufuhr fliest der Widerstand der Zuleitung nicht mit in das Messergebnis ein. Nach Bestimmung der Breite, Höhe und Länge der Proben erfolgte im Anschluss unter reduzierenden Bedingungen in Ar/4% H₂-Atmosphare im Temperaturbereich von Raumtemperatur bis 900 °C die Messung der elektrischen Leitfähigkeit. Bei jedem Messpunkt wurde der Spannungsabfall mit Hilfe eines Multimeters aufgezeichnet. Aus den an jeweils drei Stellen bestimmten Probenabmessungen und den Werten für die Stromstärke I und die Spannung U ergab sich die elektrische Leitfähigkeit.

In erster Näherung waren die Versuchsergebnisse der beiden zu vergleichenden Schichtsysteme ebenfalls vergleichbar. Die Leitfähigkeiten bewegten sich jeweils um ca. 10.000 S/cm bei Raumtemperatur, so dass die prinzipielle Eignung des erfindungsgemäßen Anoden-Schichtsystem festgestellt werden konnte.

In der Anmeldung zitierte Druckschriften:
[1] A. Tsoga, A. Gupta, A. Naomidis, D. Skarmoutsos, P. Nikolopoulos, "Performance of a Double-Layer CGO/YSZ Elektolyte for Solid Oxide Fuel Cell", lonics Vol. 4 (1998) 234 - 240.
[2] C. Brahim, A. Ringuede, E. Gourba, M. Cassir, A. Billard, P. Briois, "Electrical properties of thin bilayered YSZ/GDC SOFC electrolyte elaborated by sputtering", Journal of Power Sources Vol.: 156, Issue: 1 (2006) 45 - 49.
[3] M. Lang, P. Szabo, Z. Ilhan, S. Cinque, T. Franco, G. Schiller, "Development of solid oxide fuel cells and short stacks for mobile application", J. Fuel Cell Science and Technology Vol. 4 (4) (2007), 384 - 391.
[4] A. Tsoga, A. Gupta, A. Naomidis, P. Nikolopoulos, "Gadolinia-doped ceria and yttriastabilized zirkonia interfaces: regarding their application for SOFC technology", Acta mater, Vol. 48 (2000) 4709 - 4714.
[5] V. A. C. Haanappel, M. J. Smith, "A review of standardising SOFC measurement and quality assurance at FZJ", J. Power Sources 171 (2007), 169 - 178.

## Patentansprüche

1. Poröses Anodenschichtsystem für elektrochemische Anwendungen, umfassend wenigstens zwei Schichten, wobei die erste Schicht als Trägerschicht Zirkoniumdioxid und die zweite Schicht als die für den Kontakt mit einem Elektrolyten vorgesehene Funktionsschicht dotiertes Ceroxid aufweist,
***dadurch gekennzeichnet, dass***
- das poröse Anodenschichtsystem eine Gesamtporosität von wenigstens 30 Vol.-% aufweist, und dass
- sowohl die erste als auch die zweite Schicht zusätzlich Nickeloxid mit einem Anteil von 20 - 80 Gew.-% oder Nickel aufweist.

2. Poröses Anodenschichtsystem nach Anspruch 1, bei dem die erste Schicht ein mit Yttrium oder Scandium dotiertes Zirkoniumdioxid aufweist oder die zweite Schicht ein mit Gadolinium oder Samarium dotiertes Ceroxid aufweist.

3. Poröses Anodenschichtsystem nach einem der vorhergehenden Ansprüche, bei dem die erste Schicht mit Yttrium dotiertes Zirkonium und die zweite Schicht mit Gadolinium dotiertes Ceroxid als Hauptkomponente aufweist.

4. Poröses Anodenschichtsystem nach einem der vorhergehenden Ansprüche, bei dem sowohl die erste Schicht als auch die zweite Schicht jeweils mittlere Porendurchmesser von weniger als 1 µm aufweisen.

5. Poröses Schichtsystem nach einem der vorhergehenden Ansprüche, bei dem die Poren der zweiten Schicht regelmäßig kleiner und homogener verteilt sind als die der ersten Schicht, und insbesondere einen mittlere Porendurchmesser von weniger als 300 nm aufweisen.

6. Poröses Anodenschichtsystem nach einem der vorhergehenden Ansprüche, bei dem die erste Schicht als mechanische Trägerschicht eine Schichtdicke zwischen 200 und 1000 µm, vorteilhaft mehr als 300 µm, und die zweite Schicht als Anodenfunktionsschicht eine Schichtdicke zwischen 3 und 20 µm, insbesondere zwischen 5 und 15 µm aufweist.

7. Poröses Anodenschichtsystem nach einem der vorhergehenden Ansprüche 3 bis 6, mit einer zwischen den beiden Schichten angeordneten Zwischenschicht, die sowohl Zirkonium als auch Cer aufweist, und eine Schichtdicke von weniger als 20 µm, insbesondere eine Schichtdicke im Bereich zwischen 1 und 10 µm aufweist.

8. Verwendung eines porösen Anodenschichtsystems nach einem der vorhergehenden Ansprüche 1 bis 7 als Anode in einer Hochtemperatur-Brennstoffzelle, insbesondere in einer Hochtemperatur-Brennstoffzelle, die für Betriebstemperaturen zwischen 400 °C und 750 °C, vorteilhaft unterhalb von 650 °C vorgesehen ist.

9. Verfahren zur Herstellung eines porösen Anodenschichtsystems mit einer Gesamtporosität von wenigstens 30 Vol.-%, mit den Schritten
- auf eine erste Trägerschicht, umfassend Zirkoniumdioxid, wird eine zweite Funktionsschicht als Anode, umfassend dotiertes Ceroxid, aufgebracht, wobei sowohl die erste als auch die zweite Schicht zusätzlich Nickeloxid mit einem Anteil von 20 - 80 Gew.-% oder Nickel aufweisen,
- für die erste Schicht wird ein Pulver umfassend Zirkoniumdioxid mit einer Partikelgröße von d₅₀ < 0,5 µm und Nickel oder Nickeloxid mit einer Partikelgröße von d₅₀ < 1 µm eingesetzt,
- für die zweite Schicht wird ein Pulver umfassend Cer mit einer Partikelgröße von d₅₀ ≤ 0,3 µm und Nickel oder Nickeloxid mit einer Partikelgröße von d₅₀ < 1 µm eingesetzt.

10. Verfahren zur Herstellung eines porösen Anodenschichtsystems nach vorhergehendem Anspruch 9 bei dem für die erste Schicht mit Yttrium oder Scandium dotiertes Zirkonium, und für die zweite Schicht mit Gadolinium oder Samarium dotiertes Ceroxid als Hauptkomponente eingesetzt wird.

11. Verfahren zur Herstellung eines porösen Anodenschichtsystems nach einem der vorhergehenden Ansprüche 9 bis 10, bei dem die Porosität der ersten Schicht größer eingestellt wird als bei der zweiten Schicht.

12. Verfahren zur Herstellung eines porösen Anodenschichtsystems nach einem der vorhergehenden Ansprüche 9 bis 11, bei dem sowohl die erste Schicht als auch die zweite Schicht jeweils mit mittleren Porendurchmessern von weniger als 1 µm hergestellt werden.

## Claims

1. Porous layered anode system for electrochemical applications, comprising at least two layers, the first layer containing zirconium dioxide as carrier layer and the second layer containing doped cerium oxide as the functional layer intended for contact with an electrolyte, ***characterized in that***
- the porous layered anode system has a total porosity of at least 30% by volume, and **in that**
- both first and second layers additionally contain nickel oxide in a proportion of 20 - 80 % by weight, or nickel.

2. Porous layered anode system according to Claim 1 wherein the first layer contains an yttrium- or scandium-doped zirconium dioxide or the second layer contains a gadolinium- or samarium-doped cerium oxide.

3. Porous layered anode system according to either of the preceding claims wherein the first layer comprises yttrium-doped zirconium, and the second layer, gadolinium-doped cerium oxide, as the principal constituent.

4. Porous layered anode system according to any one of the preceding claims wherein the first layer and the second layer both have an average pore diameter of less than 1 µm.

5. Porous layered anode system according to any one of the preceding claims wherein the pores of the second layer are consistently smaller and more homogeneously distributed than those of the first layer, and in particular have an average pore diameter of less than 300 nm.

6. Porous layered anode system according to any one of the preceding claims wherein the first layer has a thickness of between 200 and 1000 µm, advantageously more than 300 µm, as mechanical carrier layer, and the second layer has a thickness of between 3 and 20 µm, in particular between 5 and 15 µm, as the functional anodic layer.

7. Porous layered anode system according to any one of the preceding Claims 3 to 6, with an intermediate layer disposed between the two layers which contains both zirconium and cerium and has a thickness of less than 20 µm and in particular a thickness in the range of between 1 and 10 µm.

8. Use of a porous layered anode system according to any one of the preceding Claims 1 to 7 as an anode in a high-temperature fuel cell, in particular in a high-temperature fuel cell for operating temperatures of between 400°C and 750°C and advantageously below 650°C.

9. Process for the manufacture of a porous layered anode system with a total porosity of at least 30% by volume, with the following steps
- over a first carrier layer containing zirconium dioxide, a second functional anodic layer containing doped cerium oxide is applied, both first and second layers additionally containing nickel oxide in a proportion of 20 - 80 % by weight, or nickel,
- a powder containing zirconium dioxide with a particle size d₅₀ of < 0.5 µm and nickel or nickel oxide with a particle size d₅₀ of < 1 µm is used for the first layer,
- a powder containing cerium with a particle size d₅₀ of ≤ 0.3 µm and nickel or nickel oxide with a particle size d₅₀ of < 1 µm is used for the second layer.

10. Process for the manufacture of a porous layered anode system according to the preceding Claim 9, in which yttrium- or scandium-doped zirconium is used for the first layer, and gadolinium- or samarium-doped cerium oxide is used as the principal constituent of the second layer.

11. Process for the manufacture of a porous layered anode system according to either of the preceding Claims 9 and 10, in which the porosity of the first layer is set greater than that of the second layer.

12. Process for the manufacture of a porous layered anode system according to any one of the preceding Claims 9 to 11, in which both the first layer and the second layer are produced with average pore diameters of less than 1 µm.

## Revendications

1. Système poreux de couches d'anode destiné à des applications en électrochimie, comprenant au moins deux couches, sachant que la première couche présente, en tant que couche de support, du dioxyde de zirconium et que la deuxième couche présente, en tant que couche fonctionnelle prévue en vue d'établir le contact avec un électrolyte, un oxyde de cérium dopé,
**caractérisé en ce**
- **que** le système poreux de couches d'anode présente une porosité globale d'au moins 30 % en volume, et
- en ce qu'aussi bien la première que la deuxième couche présentent, en supplément, de l'oxyde de nickel présent en une proportion allant de 20 à 80 % en poids ou du nickel.

2. Système poreux de couches d'anode selon la revendication 1, dans le cadre duquel la première couche présente un oxyde de zirconium dopé avec de l'yttrium ou du scandium, ou en ce que la deuxième couche présente un oxyde de cérium dopé avec du gadolinium ou du samarium.

3. Système poreux de couches d'anode selon l'une quelconque des revendications précédentes, dans le cadre duquel la première couche présente du zirconium dopé avec de l'yttrium, et en ce que la deuxième couche présente de l'oxyde de cérium dopé avec du gadolinium, en tant que composants principaux.

4. Système poreux de couches d'anode selon l'une quelconque des revendications précédentes, dans le cadre duquel aussi bien la première couche que la deuxième couche présentent respectivement des diamètres de pore moyens inférieurs à 1 µm.

5. Système poreux de couches d'anode selon l'une quelconque des revendications précédentes, dans le cadre duquel les pores de la deuxième couche sont plus petits régulièrement et sont répartis de manière plus homogène que les pores de la première couche, et en ce qu'ils présentent en particulier un diamètre de pore moyen inférieur à 300 nm.

6. Système poreux de couches d'anode selon l'une quelconque des revendications précédentes, dans le cadre duquel la première couche présente, en tant que couche de support mécanique, une épaisseur de couche comprise entre 200 et 1000 µm, de manière avantageuse supérieure à 300 µm, et en ce que la deuxième couche présente, en tant que couche fonctionnelle d'anode, une épaisseur de couche comprise entre 3 et 20 µm, en particulier entre 5 et 15 µm.

7. Système poreux de couches d'anode selon l'une quelconque des revendications précédentes 3 à 6, comprenant une couche intermédiaire disposée entre les deux couches, laquelle présente aussi bien du zirconium que du cérium et qui présente une épaisseur de couche inférieure à 20 µm, en particulier une épaisseur de couche comprise dans la plage entre 1 et 10 µm.

8. Utilisation d'un système poreux de couches d'anode selon l'une quelconque des revendications 1 à 7 en tant qu'anode dans une pile à combustible à haute température, en particulier dans une pile à combustible à haute température, qui est prévue pour des températures de fonctionnement comprises entre 400 °C et 750 °C, de manière avantageuse inférieures à 650 °C.

9. Procédé servant à fabriquer un système poreux de couches d'anode présentant une porosité globale inférieure à 30 % en volume, comprenant les étapes consistant à :
- appliquer, sur une première couche de support comprenant du dioxyde de zirconium, une deuxième couche fonctionnelle en tant qu'anode, laquelle comprend de l'oxyde de cérium dopé, sachant qu'aussi bien la première couche que la deuxième couche présentent, en supplément, de l'oxyde de nickel présent en une proportion allant de 20 à 80 % en poids ou du nickel ;
- utiliser, pour la première couche, une poudre comprenant du dioxyde de zirconium présentant une granulométrie d₅₀ < 0,5 µm et du nickel ou de l'oxyde de nickel présentant une granulométrie d₅₀ < 1 µm ;
- utiliser, pour la deuxième couche, une poudre comprenant du cérium présentant une granulométrie d₅₀ ≤ 0,3 µm et du nickel ou de l'oxyde de nickel présentant une granulométrie d₅₀ < 1 µm.

10. Procédé servant à fabriquer un système poreux de couches d'anode selon la revendication précédente 9, dans le cadre duquel on utilise, pour la première couche, un zirconium dopé avec de l'yttrium ou du scandium, et en ce qu'on utilise, pour la deuxième couche, de l'oxyde de cérium dopé avec du gadolinium ou du samarium, en tant que composants principaux.

11. Procédé servant à fabriquer un système poreux de couches d'anode selon l'une quelconque des revendications 9 à 10, dans le cadre duquel la porosité de la première couche est supérieure à la porosité de la deuxième couche.

12. Procédé servant à fabriquer un système poreux de couches d'anode selon l'une quelconque des revendications précédentes 9 à 11, dans le cadre duquel aussi bien la première couche que la deuxième couche sont fabriquées respectivement avec des diamètres de pore moyens inférieurs à 1 µm.
